# EUROPEAN PATENT APPLICATION

(11) **EP 1 332 937 A1**
(43) Date of publication of application: **06.08.2003**
(21) Application number: 03380020.2
(22) Date of filing: 04.02.2003
(51) Int. Cl.: B60T 7/06, B60R 21/09

(54) **Unlocking device for motor vehicle brake and/or clutch pedal.**

(30) Priority: 04.02.2002 ES 200200254
(71) Applicant: MTC S. Coop., 48300 Ajangiz, Bizkaia (ES)
(72) Inventor: Mandaluniz Bilbao, Joseba, 48300 Guernica, Bizkaia (ES)
(74) Representative: Urteaga Simarro, José Antonio

(57) **Abstract**

A mechanism to unlock a brake and/or clutch pedal (31) in the event of a head-on collision. Two components (1 and 2) are connected to two different points (29 and 39) of the vehicle and in the event of a collision slide against each other, thereby releasing the lever or levers. This is achieved, in case of front collision, because the housings of the bushing bearing (25) of the pedal, come apart from each other.

## Description

The invention concerns a protective mechanism that can be applied to motor vehicles. The aim of the mechanism is to allow the brake pedal to unlock in the event of an accident, a system usually referred to as the "Crash System". By extension, and bearing in mind that some vehicles have a single shaft common to both the brake and clutch pedal, the invention can also be used to unlock clutch pedals.

Generally speaking when drivers see that a head-on collision is imminent they automatically press their foot down on the brake pedal, and even when the vehicle is hit side-on. If the foot continues to exert pressure on the pedal at the moment of impact, the force of the impact is directly transferred to the driver's foot, causing injuries to his/her lower limbs and extremities that can often be serious. Furthermore, the load deriving from the servo-assisted brake system exaggerates the impact.

It should also be added that even if the driver does not operate the pedal there may still be a danger of him/her being injured as a result of his/her foot becoming trapped underneath the pedals.

One well-known invention, with reference GB-A-2031814, concerns a mechanism of this type that releases the brake pedal in the event of a collision, breaking the base of the brake pedal lever so that it is directed away from the driver's limbs and extremities.

Vehicles manufactured by Volkswagen Group feature a metal device that is inserted between the wall separating the motor from the passenger compartment -known as a 'firewall'- and a transverse member-known as a 'cross member'- inside the vehicle itself, e.g., a beam supporting the dashboard or another similar system. This mechanism features a central area with two parallel walls between which is inserted a shaft supporting the brake and/or clutch pedal.

In the event of a collision, the two side walls collapse in crumple zones, with the base of the brake pedal lever breaking in the process, thus unlocking the lever together with the pedal shaft to ensure that it is not forced against the driver's limbs and extremities.

Generally speaking this latter system does not completely guarantee the safety of the vehicle occupant.

Vehicles manufactured by Renault have a backup safety device whereby at the moment of impact the brake lever breaks into pieces, freeing the lever completely. This system is expensive, however, due to the number of components and the complex assembly process as the shaft must break safely at the moment of impact.

It is an object of this invention to provide an unlocking device for the brake and/or clutch lever shaft that is extremely easy to assemble and operate.

Another object of this invention is to provide an unlocking device for the brake and/or clutch lever shaft that is completely safe when it operates.

To achieve these objectives the invention operates according to the difference between the way in which the bodywork crumples in the area where the driver would support his/her feet if there were no pedals and which separates this area from the engine, normally referred to as a firewall, and the behaviour of the transverse supporting beam, or cross member, a hollow beam with a predominantly rectangular cross-section supporting the dashboard unit or any other system in this part of the vehicle.

Because of the characteristics and applications of these features, the distance by which the firewall panel is displaced in a collision is greater than the distance by which the cross member is displaced in the same collision, particularly when this firewall also supports the load from the vehicle engine.

According to this invention two components with different configurations are provided. One of these components is secured to the firewall and the other is connected to the cross member. Both can be joined together and both feature a transverse housing to receive part of the section of the shaft supporting the brake lever, with the two housings comprising all of this section of the shaft and a sufficient part of the shaft itself.

Given that some vehicles do not have the cross member, or transverse beam, fitted to them, one of the components is connected to the other part in the vehicle that is displaced for a considerable distance in relation to the firewall.

In the event of a collision, the component secured to the firewall is displaced longitudinally further towards the rear of the vehicle than the component connected to the cross member. As a result the pressure created by the difference in the distance these components are displaced causes both of them to become unlocked, thus releasing the brake lever shaft from its position. The shaft is displaced until it reaches the area where it is released.

The advantage of this behaviour over other similar systems is that it involves concepts other than the cutting, breaking, or slicing of the steering column and that following the collision the pedal has a greater chance of being forced against either the firewall or the floor of the passenger compartment, thus reducing the impact on the driver's feet due to the fact that it tilts in relation to the joint between the booster and the pedal.

A preferred solution of this invention involves the two components being connected together at corresponding sloping surface sections. The two sections both feature clips, grooves and/or projections that can be connected together to form a single stable unit holding the brake lever shaft in position.

During the impact and after the firewall has moved towards the vehicle rear, the component connected to it is forced to slide towards the passenger compartment.

The component connected to the firewall occupies the lower part of the assembled unit and its sloping section elevates from its inner end towards the front of the vehicle where it is fixed to the firewall. This sloping section is to be found on the upper face of the component.

The other component, connected to the cross member, occupies the area above the aforementioned component and its sloping section, to be found on its upper face, also elevates from the rear end opposite the end secured to the cross member.

Both the lower and upper components form irregular prism shapes of the same size in the transverse direction. In the longitudinal direction, however, the lower component is larger than the upper one.

We would like to point out here that the size of the components can differ depending on the vehicle design and is not restricted to the dimensions stated here.

As stated above, the joining together of the two components with the clips, grooves and projections located on the sloping sections allows the brake lever shaft to be fitted between them. It also facilitates the storage, handling and transporting of these units prior to their installation in the vehicle.

When the collision occurs the displacement of the firewall forces the lower component towards the rear of the vehicle. The other component is forced to slide on top of the lower component because of the related movements occurring during the collision, thus breaking the clips joining the two components on their sloping sections and subsequently freeing one component from the other and also separating the semi-housings controlling the movement of the brake lever shaft.

Nevertheless, the two semi-housings are only partly separated as the shaft is released in a controlled manner and is free to move around in a large, enclosed space that is created when the two components come apart from each other. The invention works in such a way that the upper part of the pedal, in addition to being directed to this controlled area, does not damage the driver's tibia.

The lever system that forms the brake lever is thus shattered, ensuring that the force of the impact is not transmitted to the driver as the point supporting the lever has been removed.

A preferred solution of the invention involves the lower component being made up of two staggered sloping surface areas separated by a transverse housing for the brake lever shaft. Each of these areas is formed by another two areas that are symmetrical in relation to the central longitudinal shaft, forming a central recess that allows the brake lever to pass through.

As the two components are matching, the surface areas of the upper component are arranged in the same way.

Additional corresponding rails are fitted on the surface areas of both components. These rails have lateral projections and adjoining clips and another connection system by which both components can be assembled in order to house the brake lever shaft.

The upper and lower components are connected to the firewall and the cross member respectively, or to the corresponding element, by different types of connectors, bolts or clips, etc.

The plans attached show a practical solution according to the invention, full details of which are given below:
Figure 1 shows a plan of the lower component according to the invention that is fixed to the firewall.
Figure 2 is a view from the left of the diagram above.
Figure 3 is an overhead view of Figure 2.
Figure 4 is a plan of the upper component which is fixed to the cross member or to another area that is displaced for a considerable distance in relation to the firewall, according to the invention.
Figure 5 is a view from the left of Figure 4.
Figure 6 is a view from beneath Figure 5.
Figure 7 is a diagram of the rails on the lower component, according to view M in Figure 1.
Figure 8 is a diagram of the rails on the upper component, according to view N in Figure 5.
Figure 9 is an enlarged diagram of detail C in Figure 3.
Figure 10 are an enlarged diagram of detail B in Figure 3.
Figure 11 is an enlarged diagram of detail A in Figure 1.
Figure 12 is an enlarged diagram of detail E in Figure 6.
Figure 13 is an enlarged diagram of detail D in Figure 6.
Figure 14 is an enlarged diagram of detail A in Figure 5.
Figure 15 shows the connection between the two components with the brake lever shaft housed between them, in the standard position.
Figure 16 shows the same unit at the start of the impact.
Figure 17 shows the same unit following the impact received by the vehicle.
Figure 18 shows the assembly of the invention in the rest position with a detail of the shaft.
Figure 19 shows the layout of the unit after the impact on the vehicle along with an enlarged detail of the shaft position.

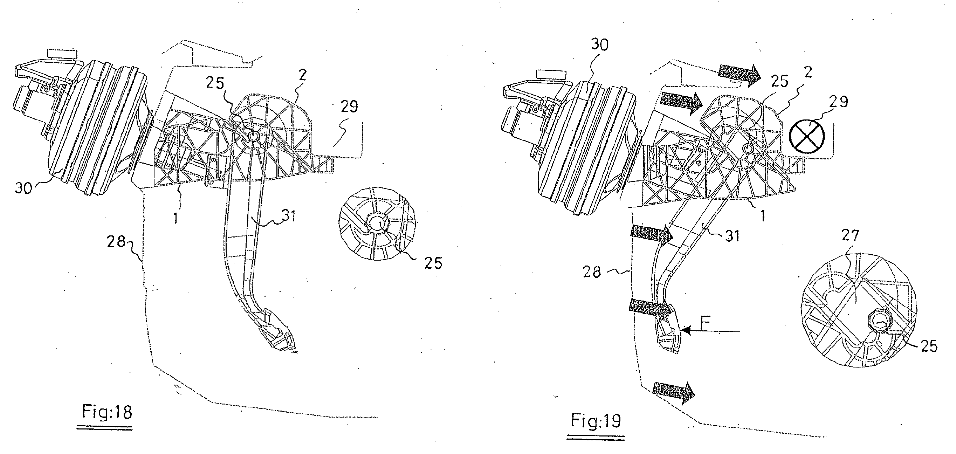

According to Figure 18 we can see the position of the invention unit, the components (1, 2) in relation to the wall or firewall (28), the servo-assisted brake system (30) and the fixed transverse element or cross member (29). The lower component (1) is fixed or secured to the wall (28) and the upper component (2) is fixed or secured to the cross member (29).

A housing is formed between them by the two components (1, 2) to receive the shaft (25) which is then connected to the brake lever (31) so that the vehicle's braking system can operate.

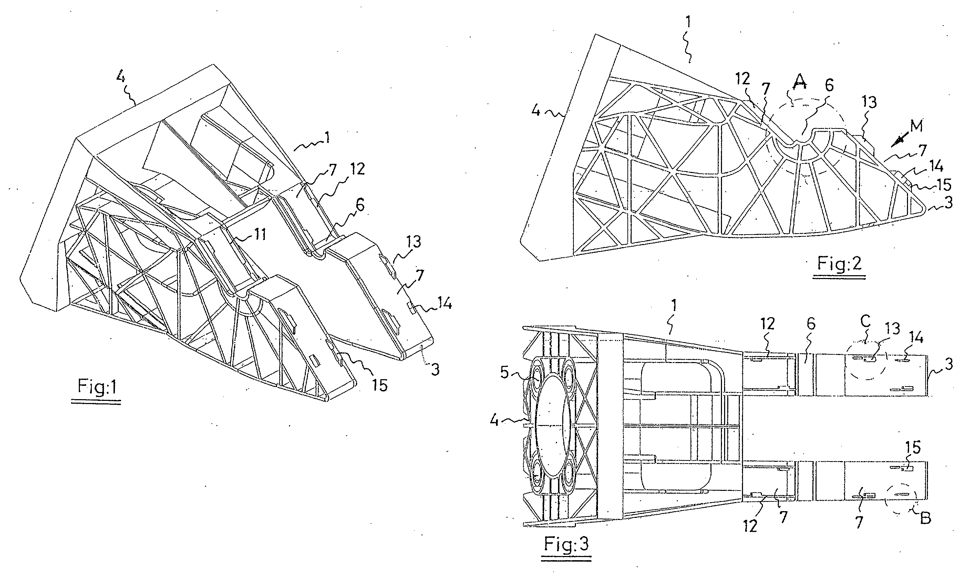

The lower component (1) -Figures 1, 2 and 3 - forms an irregular prism shape featuring an end (4) equipped with connections (5) so that it can be attached to the vehicle wall or bodywork -firewall (28). The body extends towards the vehicle interior until it forms a predominantly rounded end (3).

The body (1) has at least one longitudinal sloping area (7) and a predominantly horizontal transverse semi-socket (6) to receive part of the shaft section (25).

By way of example, in this practical solution of the invention, the part features two pairs of sloping surfaces (7), both of which are staggered longitudinally and separated at an equal distance from the longitudinal shaft. In this case the housings (6) for the shaft are formed between two longitudinal sloping sections.

Rails (12, 13, 14, 15) have been attached to the surfaces of these sections (7) so that they can be connected to the upper component.

In these 3 figures we can see the details (A, B, C) and the arrow (M) which will be described in detail at a later stage.

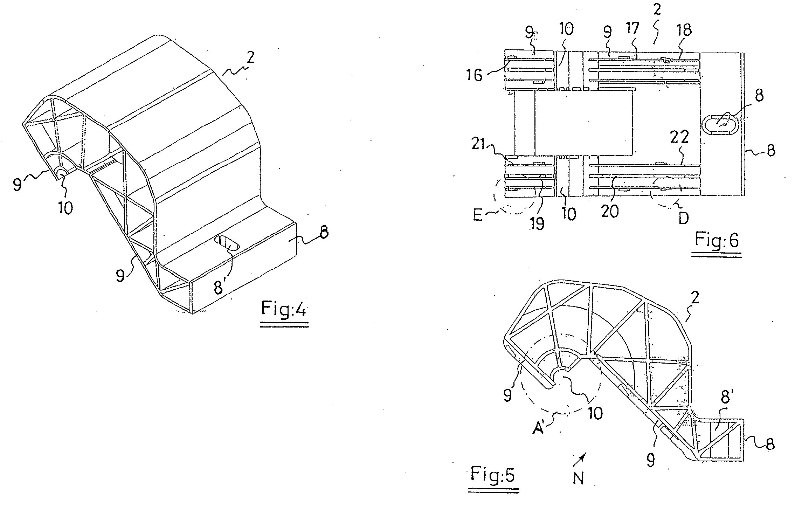

In accordance with Figures 4, 5 and 6 we can see the upper component (2) with one end (8) projecting forwards so it can be secured by (8') to the vehicle's transverse element, e.g., the cross member (29) or to another area that is displaced for a considerable distance in relation to the firewall.

This upper component (2) also forms an irregular prism shape and has two sloping surface areas (9) on its lower face and some predominantly horizontal semi-recesses (10) for the brake lever shaft.

As with the lower component (1), the sloping surfaces (9) have rails and clips (16, 17, 18, 19, 20, 21, 22) attached to them. These link up with the rails and clips on the lower component (1) in order to secure the connection between the two components.

Details (A, E, D) and the view according to arrow (N) will be commented on in more detail at a later stage.

In this particular case the two bodies (1, 2) are made of an injected plastic material with the corresponding reinforcements made of injection-moulded aluminium and various alloys although other types of material can also be used.

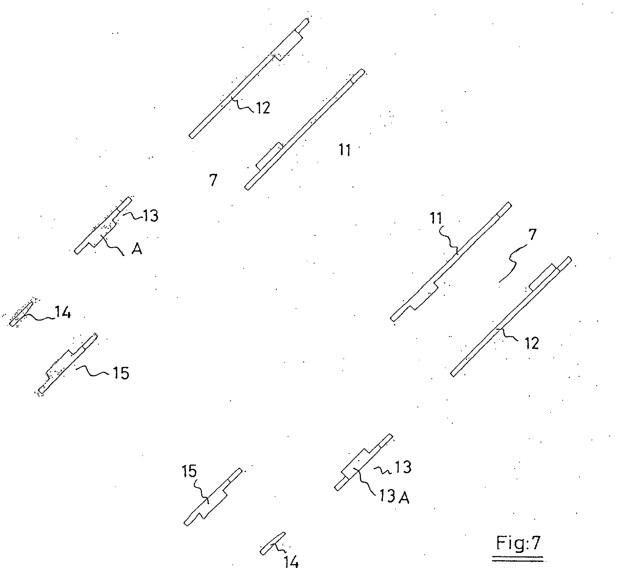

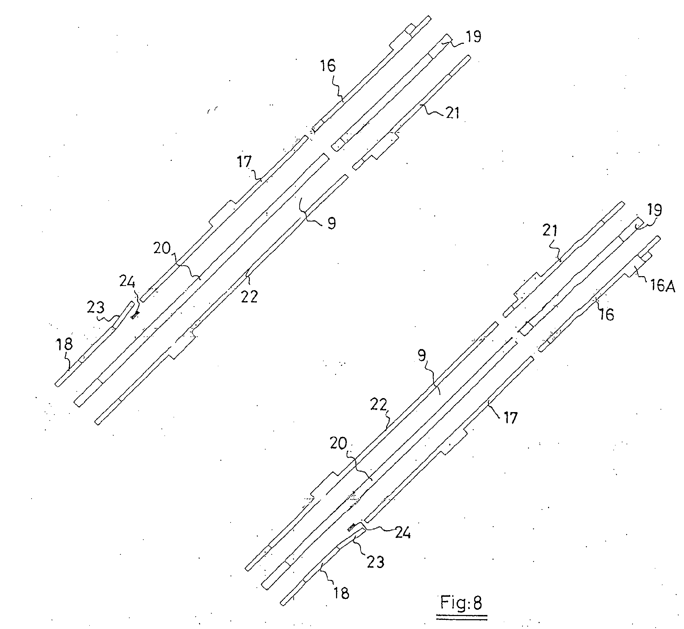

The rails and clips in Figures 7, 8, 9, 10, 11, 12 and 13 define the way in which the surfaces of the corresponding sloping areas (7, 9) will be joined together.

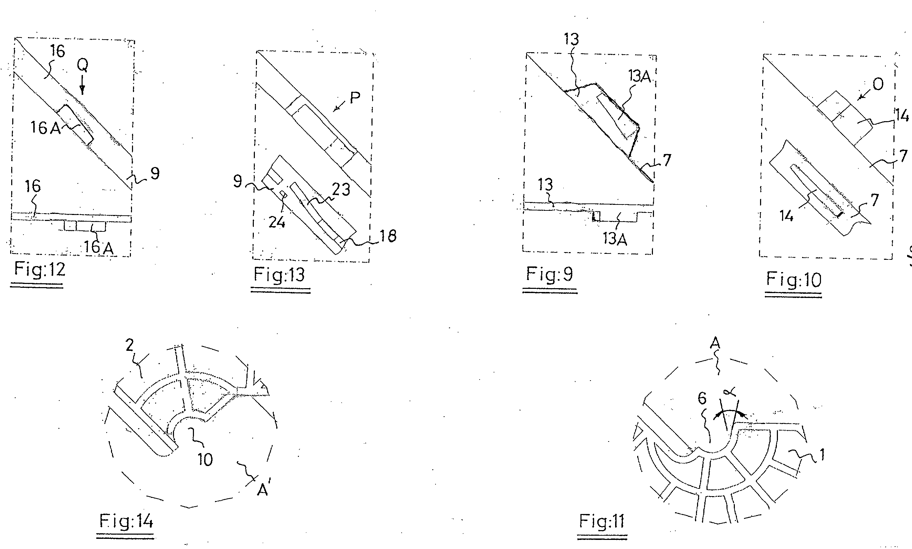

The surfaces (7) feature rails (11, 12, 13, 14, 15) some of which have elevated side projections (13A), Figure 9, with sloping inner surfaces.

The surfaces (9) have rails (16, 17, 18, 19, 20, 21, 22) fitted to them, some of which have side projections (16A), Figure 12, projecting out of the surface itself (9), the upper surface of which is sloping.

During assembly these projections slide into position on top of each other.

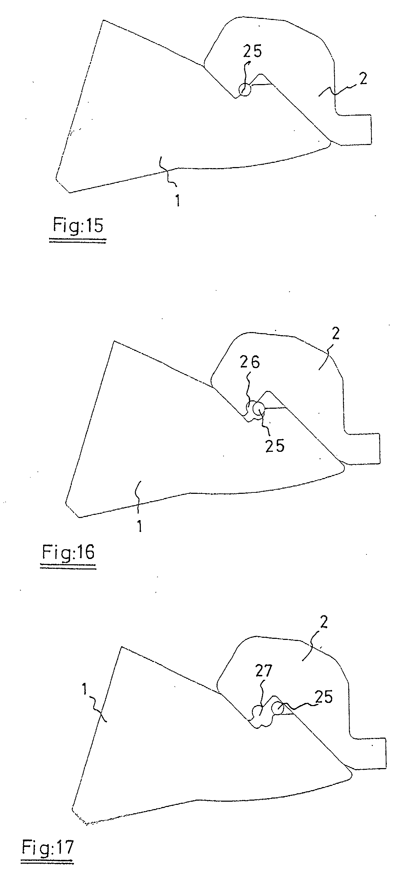

Similarly, clips have been fitted between the projections (14) on the surfaces (7) and the sloping sections (23) of the surfaces (9), allowing them to enter in the space between these portions (23) and the adjoining raised areas (24), Figures 10 and 13.

These and other means of connecting the sloping surfaces (7, 9) are possible and feasible, e.g., gluing the two surfaces together, although this is not a specific feature of this invention, and is mentioned, rather, as an indication of how the surfaces might be joined together.

In accordance with Figure 11, we can see the detail of the semi-housing (6) of the lower component (1). In Figure 12 we can see the semi-housing (10) of the upper component (2). When the two components (1, 2) are joined together the two semi-housings form a central recess which receives the bushing surrounding the brake lever shaft (25).

It should be pointed out here that the angle, specifically the leakage angle (α) detailed in Figure 11, is there to facilitate the movement of the shaft (25) towards the right hand side of figure, i.e., towards the rear of the vehicle.

Figure 15 shows the final rest position of the assembled unit housing the shaft (25). At the start of the collision, Figure 16, the part (1) is forced towards the rear of the passenger compartment and the two semi-housings surrounding the shaft (25) start to come away from each other, with the two components (1, 2) sliding along against each other.

At the end of the collision, Figure 17, a sizeable cavity (27) has been formed between the two components (1, 2). As can be seen the shaft (25) has space to move around inside this cavity, nullifying the lever effect and preventing the brake lever from reaching the driver's lower limbs and extremities.

The unit is assembled, according to Figure 18, by positioning the upper part of the brake lever (31) with the shaft (25) in the centre of the lower component (1).

It should be pointed out that the correct assembly of the invention involves the two bodies (1, 2) being connected to the pedal and pedal shaft. The pedal shaft incorporates the corresponding bushing inside the ad hoc pedal housing with this forming the assembled unit that is supplied to the vehicle manufacturer.

Finally the upper component (2) is connected, using the appropriate means, to the cross member (29) at position (8') on the end (8) of the cross member.

The shaft (25) will then be in the correct controlled position for it to act as a support.

When the vehicle suffers a head-on collision from any direction, the firewall (28) will always be displaced backwards, as can be seen in Figure 19 where the movements are indicated by the arrows. This means that the lower compartment (1) turns towards the passenger compartment and the upper component (2) tends to slide on top of the lower component.

As a result the shaft (25) is fully released and its movement controlled. This means that any action, according to (F), on the brake lever (31) will meet no resistance whatsoever and that the brake lever will touch the floor. The objective of this invention will, therefore, have been reached.

Furthermore, testing has shown that side-on collisions do not have a negative effect on the unit and that it remains untouched.

## Claims

1. Unlocking device for motor vehicle brake and/or clutch pedal that has been especially designed to prevent, in the event of a collision, impact on these pedals (31) and/or body parts being trapped and/or the transmission of forces against the driver's lower limbs and extremities, with a component (1) fixed to the front lower bodywork of the passenger compartment, known as a firewall (28), and another component (2) fixed to a transverse reinforcing element, known as a cross member (29) or to another element that is displaced for a considerable distance in relation to the firewall, and which has the following features:
- the component (1) fixed to the bodywork (28) forms an irregular prism shape which has an extensive central aperture running from the end (3) on the passenger compartment side, in which sloping surface areas (7) run on both sides of this aperture, both downwards and upwards on its upper face. These surface areas also feature two aligned, horizontal, transverse housings (6) providing support to the brake lever shaft (25), with the lever rotating in the aforementioned central aperture.
- the component (2) fixed to the cross member (29) and other parts is located on top of the other component (1) and comprises an end (8, 8') so that it can be fixed to this cross member. It also forms an irregular prism shape with an inner face featuring two sections (9) that slope forwards and upwards as well as two aligned, horizontal, transverse housings (10).
- both components (1, 2) are of a similar width and the surfaces of their sloping sections (7, 9) and their transverse housings (6, 10) meet together to form housings for the bushing bearing the upper support of the brake lever shaft (25).
- the sloping surfaces (7, 9) of both components (1, 2) slide against each other in the event of a collision and the housings (6, 10) come apart leaving the shaft (25) to move around inside a relatively large closed space.

2. Unlocking device for motor vehicle brake and/or clutch pedal, according to claim 1, wherein the sloping areas (7, 9) of each of the components (1, 2) are staggered and parallel to each other, with the housings (6, 10) for the shaft (25) being situated between each two steps.

3. Unlocking device for motor vehicle brake and/or clutch pedal, according to claims 1 and 2, wherein the means to connect both components (1, 2), with the pedal in its rest position, are positioned between the touching surfaces of the sloping areas (7, 9).

4. Unlocking device for motor vehicle brake and/or clutch pedal, according to claim 1, wherein the two components (1, 2) are preferably made of an injected plastic material.

5. Unlocking device for motor vehicle brake and/or clutch pedal, according to claim 1, wherein the two components (1, 2) are made of injection-moulded aluminium.

6. Unlocking device for motor vehicle brake and/or clutch pedal, according to claim 1, wherein the two components (1, 2) are made of any kind of metal alloy.

7. Unlocking device for motor vehicle brake and/or clutch pedal, according to claim 1, wherein the two components (1, 2) are fixed to the bodywork (28) and the cross member (20) respectively or to another element that, in the event of a collision, is displaced for a considerable distance in relation to the firewall.

8. Unlocking device for motor vehicle brake and/or clutch pedal, according to claim 7, wherein the two components (1, 2) are bolted to the bodywork and to the transverse elements.

9. Unlocking device for motor vehicle brake and/or clutch pedal
wherein the two components (1, 2) are attached to the bodywork and to the transverse elements with clips.

10. Unlocking device for motor vehicle brake and/or clutch pedal, according to the previous claims, wherein the two components (1, 2) can form any kind of shape.
